# EUROPEAN PATENT APPLICATION

(11) **EP 4 730 149 A1**
(43) Date of publication of application: **22.04.2026**
(21) Application number: 25188613.1
(22) Date of filing: 09.07.2025
(51) Int. Cl.: G06F 16/27, H04L 67/104, H04L 67/568

(54) **EMBEDDING VECTOR STORE ON DATAGRID**

(30) Priority: 17.10.2024 US 202418919237
(71) Applicant: Red Hat, LLC, Raleigh, NC 27601 (US)
(72) Inventor: RIGAMONTI, Vittorio, Raleigh, 27601 (US); TARRANT, Tristan, Raleigh, 27601 (US)
(74) Representative: Murgitroyd & Company

(57) **Abstract**

A method, a system, and a non-transitory computer-readable medium are provided. The method includes receiving a data object at a node of a datagrid system. The method includes generating a first association between the data object and a key that identifies the node in the datagrid system. The method includes storing the first association in a first cache of the node. The method includes converting the data object to an embedding object. The method includes generating a second association between the embedding object and the key. The method includes storing the second association in a second cache of the node.

## Description

### TECHNICAL FIELD

Aspects of the present disclosure relate to computer architecture for data processing.

### BACKGROUND

Applications based on artificial intelligence (AI) often involve processing a large amount of data in a variety of formats. To support data processing in AI-related applications, some computer systems implement an architecture that includes a content database for storing user content, a transformer for converting the user content into embeddings, and an embedding vector store (EVS, also known as embedding database) for storing embeddings generated by the transformer.

### SUMMARY

In aspects of the disclosure, a method, system and non-transitory computer-readable storage according to the claims are provided.

According to a first aspect of the disclosure, there is provided a method comprising receiving a data object at a node of a datagrid system, generating, by a processing device, a first association between the data object and a key that identifies the node in the datagrid system, storing the first association in a first cache of the node, converting the data object to an embedding object, generating, by the processing device, a second association between the embedding object and the key, and storing the second association in a second cache of the node.

The method may further comprise allocating the first cache and the second cache in the node.

3 The method may further comprise performing a proximity search based on user content in a query message, identifying the second association based on the proximity search, and returning the embedding object in response to the query message.

The datagrid system may comprise a plurality of nodes, and the method may further comprise receiving training data, dividing the training data into a plurality of data objects, and distributing the plurality of data objects to the plurality of nodes.

The plurality of nodes may be communicatively coupled to a network.

The plurality of nodes may correspond to a distributed hash table.

The embedding object may comprise a vector.

According to a second aspect of the disclosure, there is provided a system comprising a memory and a processing device operatively coupled to the memory. The processing device is configured to receive a data object at a node of a datagrid system, generate a first association between the data object and a key that identifies the node, store the first association in a first cache of the memory, convert the data object to an embedding object, generate a second association between the embedding object and the key, and store the second association in a second cache of the memory.

The processing device may be further configured to allocate the first cache and the second cache in the node.

The processing device may be further configured to perform a proximity search based on user content in a query message, identify the second association based on the proximity search, and return the embedding object in response to the query message.

The datagrid system may comprise a plurality of nodes, and the processing device may be further configured to receive training data, divide the training data into a plurality of data objects, and distribute the plurality of data objects to the plurality of nodes.

The plurality of nodes may be communicatively coupled to a network.

The plurality of nodes may correspond to a distributed hash table.

The embedding object may comprise a vector.

According to a third aspect of the disclosure, there is provided a non-transitory computer-readable medium storing instructions that, when executed by a processing device, cause the processing device to receive a data object at a node of a datagrid system, generate, by the processing device, a first association between the data object and a key that identifies the node, store the first association in a first cache, convert the data object to an embedding object, generate, by the processing device, a second association between the embedding object and the key, and store the second association in a second cache.

The instructions may further cause the processing device to allocate the first cache and the second cache in the node.

The instructions may further cause the processing device to perform a proximity search based on user content in a query message, identify the second association based on the proximity search, and return the embedding object in response to the query message.

The datagrid system may comprise a plurality of nodes, and the instructions may further cause the processing device to receive training data, divide the training data into a plurality of data objects, and distribute the plurality of data objects to the plurality of nodes.

The plurality of nodes may be communicatively coupled to a network.

The plurality of nodes may correspond to a distributed hash table.

The embedding object may comprise a vector.

### BRIEF DESCRIPTION OF THE DRAWINGS

The described implementations and the advantages thereof may best be understood by reference to the following description taken in conjunction with the accompanying drawings. These drawings in no way limit any changes in form and detail that may be made to the described implementations without departing from the spirit and scope of the disclosure.
FIG. 1 is a block diagram that illustrates an example system for data processing, according to some implementations.
FIG. 2A is a block diagram that illustrates an example computing architecture of a datagrid node, according to some implementations.
FIG. 2B is a block diagram that illustrates an example computing architecture of a datagrid cluster, according to some implementations.
FIG. 3 is a flowchart that illustrates an example method, according to some implementations.
FIG. 4 is a block diagram of an example apparatus that may perform one or more of the operations described herein, according to some implementations.

### DETAILED DESCRIPTION

In semantic search and other AI-related applications, a client device (e.g., a mobile device or a personal computer) may send a query message to an AI server and request the AI server to provide a response with content related to the query message. To process the query message and generate the response, the AI server often converts the query message, which may be in the format of text, image, audio, video, or a combination thereof, into one or more vectors. The AI server then compares the vectors with the embeddings previously uploaded to an EVS to identify the embeddings having the closest distances (e.g., shortest vector distances) to the vectors. The AI server can thus construct the response based on the identified embeddings and return the response to the client device.

To support the above-described operations, the AI server often utilizes a computer architecture with a content database to store data (e.g., training data) with similar types to the query message, a transformer to convert the data stored in the content database into embeddings, and an EVS to store the embeddings uploaded by the transformer. In existing technologies, the content database, the transformer, and the EVS are typically implemented as separate computing modules, e.g., on separate machines, in separate facilities, and/or as separate network entities. For example, each module may operate independently from the other modules, and the data exchange among the modules may go through wired or wireless network connections under specific network protocols. When the amount of data becomes excessive (e.g., tens or hundreds of billions of embeddings), the AI server may experience network latency and performance drop in creating the embeddings and storing (e.g., uploading) the embeddings to the EVS. Consequently, the user experience may be negatively affected.

In view of the shortcomings of the existing architecture, implementations of this disclosure provide a computer architecture that leverages datagrid nodes to distribute the content processing and embedding uploading. According to some implementations, a node of a datagrid system receives a data object, generates a first association between the data object and a key that identifies the node in the datagrid system, and stores the first association in a first cache of the node. The node converts the data object to an embedding object, generates a second association between the embedding object and the key, and stores the second association in a second cache of the node. With one or more features described below in detail, implementations of this disclosure advantageously reduce the network congestion and provide increased scalability for processing a large amount of data, thereby improving user experience in AI-related applications.

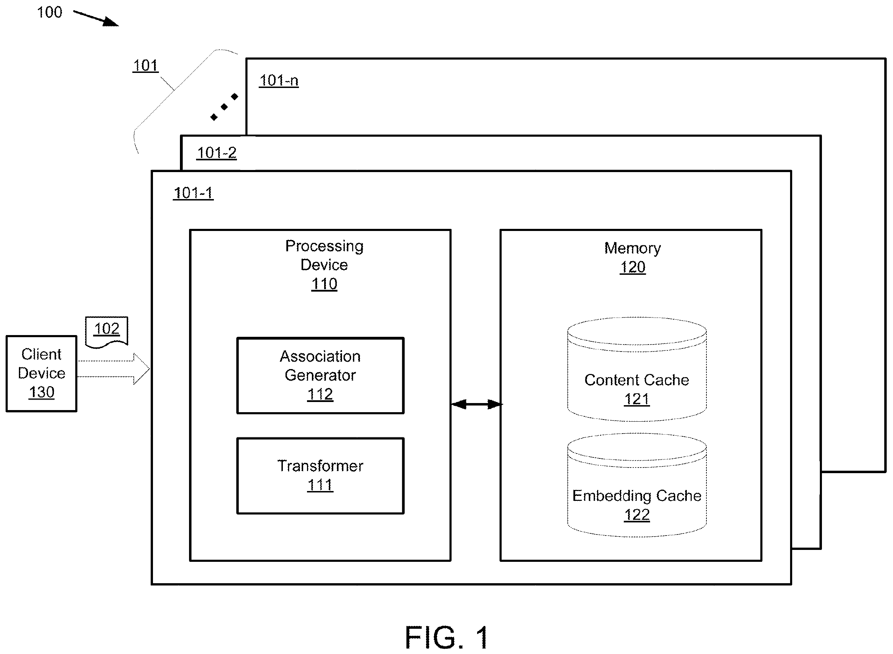

FIG. 1 is a block diagram that illustrates an example system 100 for data processing, according to some implementations. Other systems are possible, and implementations of a data processing system utilizing examples of the disclosure are not necessarily limited to the specific architecture depicted by FIG. 1.

As shown in FIG. 1, system 100 includes client device 130 and datagrid 101 communicatively coupled to each other. Client device 130 may include one or more personal computers or mobile terminals configured to train or execute an AI-related application. For example, client device 130 may provide data object 102 as training data to datagrid 101 for converting to embedding vectors. Alternatively or additionally, client device 130 may provide data object 102 as part of a query message to datagrid 101 and expect datagrid 101 to return a result as specified by the AI-related application.

A datagrid is an architecture or set of services that allow users to modify and transfer large amounts of data that are geographically distributed at different nodes. For example, when a datagrid receives multiple datasets, the data grid may save a first dataset at a first node, save a second dataset at a second node, and so forth. Each node of a datagrid may be formed by one or more machines that share the same identity in the datagrid and collectively perform a task. The nodes of datagrid may perform respective tasks independent of other nodes. For example, when a node performs a computing task, the node may perform the computing task without reliance on the computing resources of other nodes. There are many ways of implementing a datagrid. An example may be found in U.S. Patent No. 11,847,354, which is incorporated in this disclosure by reference.

Datagrid 101 includes computing devices 101-1, 101-2, ... 101-n (n is an integer greater than 1), communicatively coupled to a network. Each of computing devices 101-1, 101-2, ... 101-n may be configured as a node of a datagrid to receive a corresponding data object, e.g., via a wired or wireless network interface. Computing devices 101-1, 101-2, ... 101-n may have the same or similar architecture. Accordingly, the below description uses computing devices 101-1 as an example.

Computing device 101-1 includes processing device 110 and memory 120 communicatively coupled to each other. Each of processing device 110 and memory 120 may include a set of hardware circuitry and/or software code. In some implementations, processing device 110 and memory 120 are instantiated as separate circuits and/or software modules. In some implementations, processing device 110 and memory 120 are integrated in the same circuit and/or software module.

Processing device 110 includes association generator 112, which may execute instructions stored in memory 120 to generate associations between multiple items. As described below in detail, the associations may be structured as a key-value pair, with the key corresponding to an identifier and the value corresponding to the content of the data object.

Processing device 110 also includes transformer 111, which may execute instructions stored in memory 120 to convert a data object, or content thereof (e.g., text, image, or video data), to embeddings (e.g., vectors). Transformer 111 may be custom designed based on the application, or may be developed based on a transformation model, such as an open format transformation model. As a specific example, transformer 111 may be developed based on an ONNX model, which is an open format runtime model for machine learning.

Memory 120 may include volatile memory devices (e.g., random access memory (RAM)), non-volatile memory devices (e.g., flash memory) and/or other types of memory devices. In some implementations, memory 120 may be non-uniform access (NUMA), such that memory access time depends on the memory location relative to processing device 110. Memory 120 may store computer-readable instructions executable by processing device 110 to perform various operations as described in this disclosure.

Memory 120 includes content cache 121 and embedding cache 122 for storing data items and embedding items, respectively. For example, processing device 110 may allocate a memory region within memory 120 as content cache 121 to store content of data object 102, and may allocate a memory region within memory 120 as embedding cache 122 to store embeddings converted based on the content of data object 102.

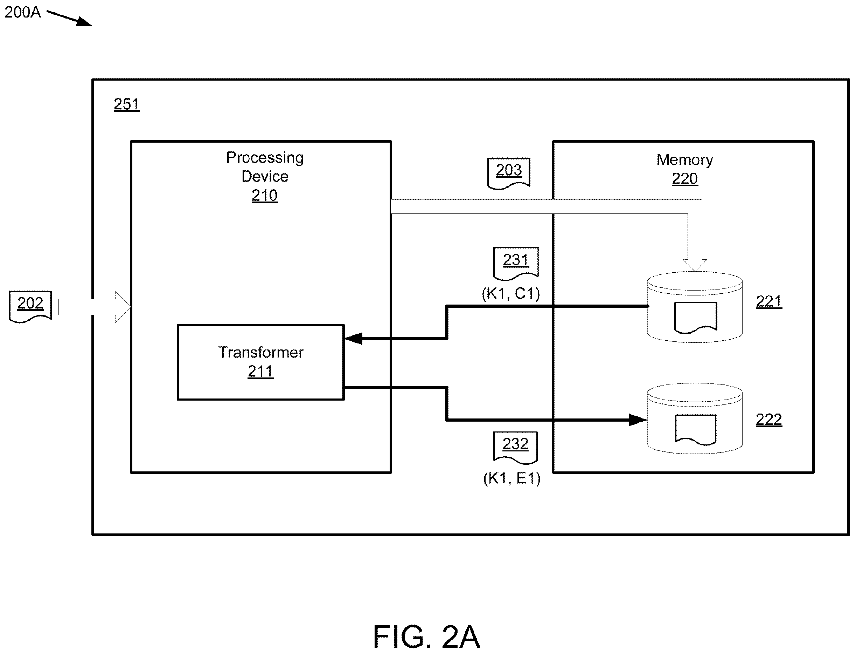

FIG. 2A is a block diagram that illustrates an example computing architecture 200A of a datagrid node 251, according to some implementations. Computing architecture 200A may be implemented by any nodes of system 100 of FIG. 1.

As illustrated, node 251 receives data object 202, which may include training data for an AI-related application. For example, when the AI-related application involves semantic search of text, data object 202 may include training text.

Node 251 includes processing device 210 and memory 220, which are operatively and communicatively coupled to each other. The communication between processing device 210 and memory 220 may be via an in-device mechanism, such as a wire on a circuit board or on an integrated circuit, a cable, or a bus. The in-device mechanism may be different from wired or wireless networking mechanisms that rely on network protocols. In some implementations, processing device 210 and memory 220 are implemented within the same enclosure of a computing device. Although FIG. 2A illustrates processing device 210 and memory 220 in separate blocks, in some implementations processing device 210 and memory 220 may be physically integrated into the same piece of hardware.

Processing device 210 includes transformer 211, which may include software code and/or hardware circuitry for transforming data objects into embeddings and uploading the embeddings to an EVS. Although FIG. 2A illustrates transformer 211 within the block for processing device 210, in some implementations processing device 210 may instantiate transformer 211 on separate hardware circuitry or in a separate software process from processing device 210.

Memory 220 has storage spaces for storing program instructions, e.g., software or firmware code, which are executable by processing device 210. Memory 220 also has content cache 221 for storing content from data object 202 and embedding cache 222 for storing embeddings uploaded by transformer 211. Accordingly, content cache 221 functions similar to a content database within in node 251 and embedding cache 222 functions similar to an EVS within in node 251. Caches 221 and 222 may correspond to storage spaces in memory 220 that have been allocated prior to the execution of the AI-related application, e.g., during the manufacture of memory 220 or during the assembly of node 251. Alternatively, caches 221 and 222 may correspond to storage spaces in memory 220 that are dynamically allocated, e.g., by processing device 210, during the execution of the AI-related application. In scenarios where caches 221 and 222 are dynamically allocated, processing device 210 may determine the sizes of caches 221 and 222 based on the application, e.g., based on the estimated volume of data to be processed by the application. In this case, processing device 210 may also dynamically adjust the sizes of caches 221 and 222 based on the volume of the data.

Upon receipt of data object 202, processing device 210 generates a first association between data object 202 and a key that identifies node 251. For example, processing device 210 may structure association 203 to include a key-value pair. The key of the key-value pair may uniquely identifies node 251 in the datagrid. In some implementations, the datagrid has a topology that corresponds to a distributed hash table. In this case, the key of the key-value pair may be the same as or derived from the key assigned to node 251 in the distributed hash table. The value of the key-value pair may be the same as or derived from the content in data object 202. For example, when data object 202 includes text of a human language, the value of the key-value pair may include at least a part of the text.

After generating association 203, processing device 210 transmits association 203 to memory 220 via, e.g., an in-device bus connecting processing device 210 and memory 220. Memory 220 in turn stores association 203 to content cache 221. As node 251 continues to receive more instances of data object 202, memory 220 in turn stores more instances of association 203 in content cache 221. The instances of association 203 stored in content cache 221 may share the same key in their respective key-value pair, even though the values in the key-value pairs may be different among the stored instances of association 203.

To generate the embeddings, transformer 211 receives the instances of association 203 from content cache 221. In the illustrated example, transformer 211 receives association instance 231, which includes a key-value pair (K1, C1), with K1 being the key and C1 being the value. Transformer 211 may then parse association instance 231 to extract content C1, and may further convert content C1 to embedding ("embedding object") E1, which may include one or more embedding vectors.

Based on content C1 and embedding E1, processing device 210 generates a second association instance 232, which may be an embedding object having a key-value pair (K1, E1), with K1 being the key and E1 being the value. Processing device 210 then transmits association instance 232 to memory 220, which stores association instance 232 in embedding cache 222. As such, node 251 converts the content in data object 202 into an embedding and uploads the embedding to an EVS. Throughout the conversion and uploading, the key of the key-value pair of association instance 232 remains K1, which is the same as the key of the key-value pair of association instance 231.

The operations described above, from the generation and storing of association 203 to the generation and storing of association instance 232, may be performed within node 251. Compared to existing techniques that use separate network entities for the transformer, the content database, and the EVS, the architecture according to FIG. 2A may advantageously reduce network traffic and improve processing latency in the execution of AI-related applications.

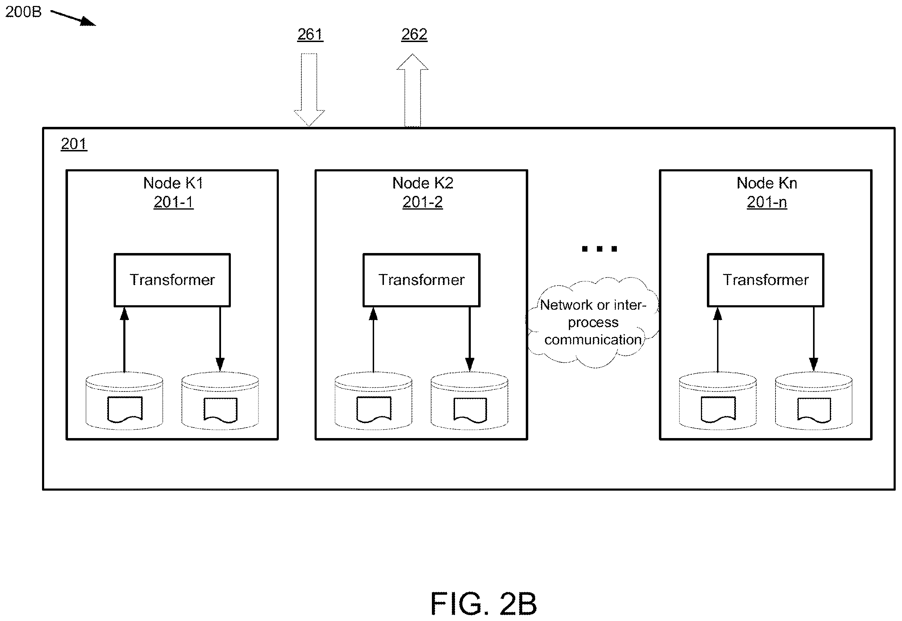

FIG. 2B is a block diagram that illustrates an example computing architecture 200B of a datagrid cluster 201, according to some implementations. Datagrid cluster 201 may be similar to datagrid system 101 of FIG. 1. As illustrated, datagrid cluster 201 is a cluster of multiple datagrid nodes 201-1, 201-2, ... and 201-n, which are communicatively coupled to each other via a network or other inter-process communication mechanisms. Each of nodes 201-1, 201-2, ... and 201-n may be similar to or the same as node 251 of FIG. 2A. For example, each of nodes 201-1, 201-2, ... and 201-n may have a transformer, a content cache, and an embedding cache to perform operations similar to those described above with reference to FIG. 2A.

In some implementations, datagrid cluster 201 has a distributed hashing topology, e.g., a topology represented by a distributed hash table. In this case, nodes 201-1, 201-2, ... and 201-n correspond to hash keys K1, K2, ... and Kn, respectively, which each uniquely identify the corresponding node in datagrid cluster 201. The content cache and the embedding cache of each node may thus use the respective identifier as the key for the key-value pairs. Example technologies for implementing a distributed hashing topology include INFINISPAN, RED HAT Data Grid, HAZELCAST, and REDIS.

When datagrid cluster 201 receives a stream of data, e.g., training data, datagrid cluster 201 may distribute the data among nodes 201-1, 201-2, ... and 201-n. For example, datagrid cluster 201 may divide the received data into multiple data objects, and may assign a first data object to node 201-1, assign a second data object to node 201-2, assign an n-th data object to node 201-n, assign an (n+1)-th data object again to node 201-1, and so forth. This way, each of nodes 201-1, 201-2, ... and 201-n is assigned a subset of all data objects. Each of nodes 201-1, 201-2, ... and 201-n may then process the assigned data objects following a procedure similar to that described with reference to FIG. 2B. For example, nodes 201-1 may generate one or more first associations based on the assigned data objects and the key K1, store the one or more first associations in a content cache, convert the one or more first associations to embeddings, generate one or more second associations based on the embeddings and the key K1, and store the one or more second associations in an embedding cache. As described above with reference to FIG. 2A, these operations are performed within each node, thereby reducing the network congestion among the nodes and reducing latency in data processing.

Datagrid cluster 201 may implement a centralized mechanism, such as a processing device external to nodes 201-1, 201-2, ... and 201-n, to divide and distribute the data. Alternatively or additionally, datagrid cluster 201 may designate a node, e.g., node 201-1, as a coordinating node, and use the processing device of the coordinating node to divide and distribute the data. The processing device for dividing and distributing data may keep track of the data objects assigned to each node, e.g., based on the keys in the key-value pairs stored in the caches.

After the training and the generation of the embeddings, datagrid cluster 201 may be deployed for the AI-related application. In the example of semantic search, datagrid cluster 201 receives query message 261, which includes semantic user content provided by a client device. A processing device of the centralized mechanism or the coordinating node may then convert the user content to one or more query vectors and instruct nodes 201-1, 201-2, ... and 201-n to perform a proximity search against the embeddings stored in the EVS. After finding a search result, e.g., a stored embedding having the shortest vector distance from the one or more query vectors, datagrid cluster 201 identifies the embedding in the search result by returning that embedding and the associated key. Datagrid cluster 201 may further generate a response 262 to query 261 based on the identified embedding and return response 262 to the client device.

As described above, implementations in accordance with architecture 200B advantageously reduce network congestion and data processing latency. Furthermore, because datagrids with distributed hashing topology generally support adjusting the number of nodes in the cluster, architecture 200B provides flexibility with respect to scaling the computing capacity up or down depending on the application. With such flexibility, architecture 200B may improve the efficiency of computing resource utilization over existing architectures.

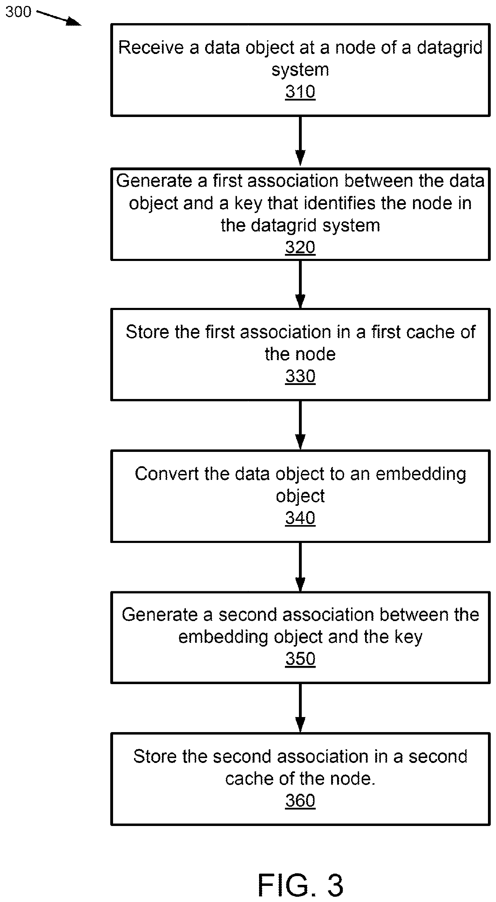

FIG. 3 is a flowchart that illustrates an example method 300, according to some implementations. Method 300 may be performed by a computing apparatus or a computing system, such as ones implemented according to architecture 200A or 200B. The illustration of method 300 in a flowchart does not necessarily mean that the operations of method 300 are performed in a chronological order. In some implementations, method 300 contemplates performing some operations in series, in parallel, or in a different order than the illustrated order. For example, it is possible that operations at 340 and 350 may be performed in parallel.

At 310, method 300 involves receiving a data object at a node of a datagrid system. The data object may be similar to data object 202 of FIG. 2A, and the node may be similar to node 251 of FIG. 2A or any of nodes 201-1, 201-2, ... and 201-n of FIG. 2B. In some implementations, the data object is a subset of AI training data that has been distributed to multiple nodes.

At 320, method 300 involves generating a first association between the data object and a key that identifies the node in the datagrid system. The first association may be similar to association 203 of FIG. 2A. In some implementations, the first association is structured as a key-value pair, with the value corresponding to the data object.

At 330, method 300 involves storing the first association in a first cache of the node. The first cache may be similar to content cache 221 of FIG. 2A. In some implementations, the first cache is allocated by the node as a content cache.

At 340, method 300 involves converting the data object to an embedding object, such as one or more vectors. The conversion may be performed by transformer 211 of FIG. 2A.

At 350, method 300 involves generating a second association between the embedding object and the key. The second association may be similar to association 232 between embedding E1 and key K1. In some implementations, the second association is structured as a key-value pair, with the value corresponding to the embedding object.

At 360, method 300 involves storing the second association in a second cache of the node. The second cache may be similar to embedding cache 222 of FIG. 2A. In some implementations, the second cache is allocated by the node as an embedding cache.

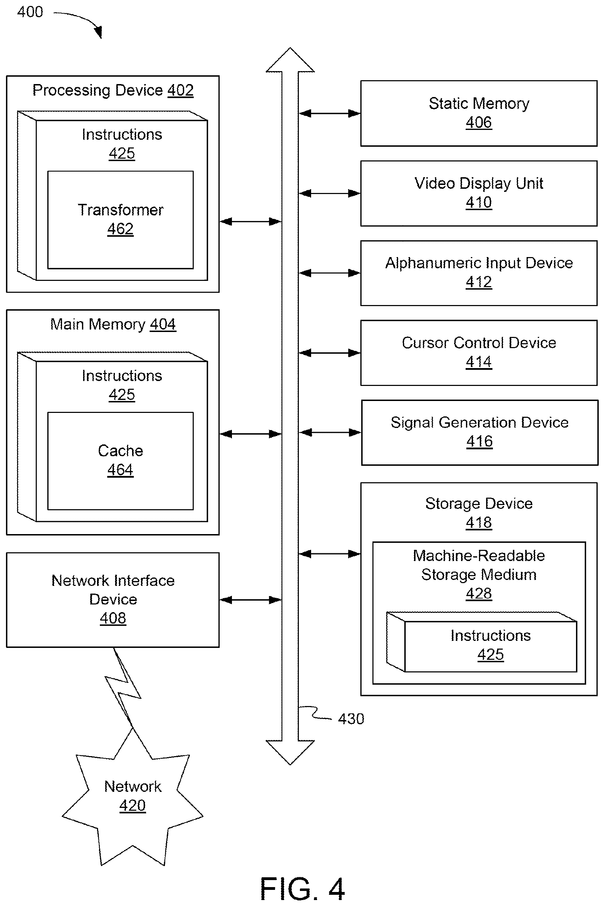

FIG. 4 is a block diagram of an example computing device 400 that may perform one or more of the operations described herein, in accordance with some implementations. For example, computing device 400 may be implemented as a datagrid node, such as node 251 of FIG. 2A, or may be implemented as a cluster of datagrid nodes, such as datagrid cluster 201 of FIG. 2B. Computing device 400 may be connected to other computing devices in a LAN, an intranet, an extranet, and/or the Internet. The computing device may operate in the capacity of a server machine in client-server network environment or in the capacity of a client in a peer-to-peer network environment. The computing device may be provided by a personal computer (PC), a set-top box (STB), a server, a network router, switch or bridge, or any machine capable of executing a set of instructions (sequential or otherwise) that specify actions to be taken by that machine. Further, while only a single computing device is illustrated, the term "computing device" shall also be taken to include any collection of computing devices that individually or jointly execute a set (or multiple sets) of instructions to perform the methods discussed herein.

Computing device 400 may include a processing device *(e.g.,* a general-purpose processor) 402, a main memory 404 (e.g., synchronous dynamic random access memory (DRAM), read-only memory (ROM)), a static memory 406 *(e.g.,* flash memory), and a data storage device 418, which may communicate with each other via a bus 430.

Processing device 402 may be provided by one or more general-purpose processing devices, such as a microprocessor, central processing unit, or the like. For example, processing device 402 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing device 402 may also include one or more special-purpose processing devices such as an application specific integrated circuit (ASIC), a field programmable gate array (FPGA), a digital signal processor (DSP), network processor, or the like. Processing device 402 may be configured to execute the operations described herein, in accordance with one or more aspects of the present disclosure, for performing the operations and steps discussed herein.

Computing device 400 may further include a network interface device 408, which may communicate with a network 420. Computing device 400 also may include a video display unit 410 *(e.g.,* a liquid crystal display (LCD) or a cathode ray tube (CRT)), an alphanumeric input device 412 *(e.g.,* a keyboard), a cursor control device *414 (e.g.,* a mouse), and/or a signal generation device 416 *(e.g.,* a speaker). In some implementations, video display unit 410, alphanumeric input device 412, and cursor control device 414 may be combined into a single component or device *(e.g.,* an LCD touch screen).

Data storage device 418 may include a computer-readable storage medium 428 on which may be stored one or more sets of instructions 425 that may include instructions for a transformer, e.g., transformer 462. Instructions 425 may also reside, completely or at least partially, within main memory 404 and/or within processing device 402 during execution thereof by computing device 400, main memory 404 and processing device 402 also constituting computer-readable media. The instructions 425 may further be transmitted or received over a network 420 via network interface device 408.

While the term "computer-readable storage medium" is described as a single medium, the term "computer-readable storage medium" should be taken to include a single medium or multiple media *(e.g.,* a centralized or distributed database and/or associated caches and servers) that store the one or more sets of instructions. The term "computer-readable storage medium" shall also be taken to include any medium that is capable of storing, encoding or carrying a set of instructions for execution by the machine and that cause the machine to perform the methods described herein. The term "computer-readable storage medium" shall accordingly be taken to include, but not be limited to, solid-state memories, optical media, and magnetic media.

Unless specifically stated otherwise, terms such as "receiving," "configuring," "identifying," "transmitting," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular implementations only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. § 112, sixth paragraph, for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific implementations. However, the illustrative discussions above are not intended to be exhaustive or to limit the invention to the precise forms disclosed. Many modifications and variations are possible in view of the above teachings. The implementations were chosen and described in order to best explain the principles of the embodiments and their practical applications, to thereby enable others skilled in the art to best utilize the implementations and various modifications as may be suited to the particular use contemplated. Accordingly, the present implementations are to be considered as illustrative and not restrictive, and the invention is not to be limited to the details given herein, but may be modified within the scope and equivalents of the appended claims.

## Claims

1. A method comprising:
receiving a data object at a node of a datagrid system;
generating, by a processing device, a first association between the data object and a key that identifies the node in the datagrid system;
storing the first association in a first cache of the node;
converting the data object to an embedding object;
generating, by the processing device, a second association between the embedding object and the key; and
storing the second association in a second cache of the node.

2. The method of claim 1, further comprising:
allocating the first cache and the second cache in the node.

3. The method of claim 1, further comprising:
performing a proximity search based on user content in a query message;
identifying the second association based on the proximity search; and
returning the embedding object in response to the query message.

4. The method of claim 1, wherein the datagrid system comprises a plurality of nodes, the method further comprising:
receiving training data;
dividing the training data into a plurality of data objects; and
distributing the plurality of data objects to the plurality of nodes.

5. The method of claim 4, wherein the plurality of nodes are communicatively coupled to a network.

6. The method of claim 4, wherein the plurality of nodes correspond to a distributed hash table.

7. The method of claim 1, wherein the embedding object comprises a vector.

8. A system comprising:
a memory; and
a processing device operatively coupled to the memory, the processing device to carry out the method of any of claims 1 to 7.

9. A non-transitory computer-readable medium storing instructions that, when executed by a processing device, cause the processing device to carry out the method of any of claims 1 to 7.
